# EUROPEAN PATENT APPLICATION

(11) **EP 4 807 655 A1**
(43) Date of publication of application: **16.09.2026**
(21) Application number: 26163165.9
(22) Date of filing: 09.03.2026
(51) Int. Cl.: G06Q 30/0251, G06Q 30/0241

(54) **ADVERTISEMENT SELECTING DEVICE, ADVERTISEMENT PRINTING SYSTEM, PRINTER, ADVERTISEMENT SELECTING METHOD, AND PROGRAM**

(30) Priority: 12.03.2025 JP 2025039555
(71) Applicant: RISO KAGAKU CORPORATION, Tokyo 108-8385 (JP)
(72) Inventor: HIGUCHI, Yukio, Tokyo, 5-34-7 (JP); ARIMURA, Eijiro, Tokyo, 5-34-7 (JP)
(74) Representative: Winter, Brandl - Partnerschaft mbB

(57) **Abstract**

An advertisement selecting device includes a storage and a controller. The controller is configured to: receive pieces of advertisement data for printing advertisements on a package to be delivered and receive settings of types of target audiences of the advertisements and placement regions of the advertisements in the package; store, in the storage, the received pieces of advertisement data, the types of the target audiences of the advertisements, and the placement regions of the advertisements in association with one another; and for each of the placement regions of the advertisements in the package, refer to the storage and select a piece of advertisement data for printing the advertisement in the placement region from among the pieces of advertisement data stored in the storage based on the placement region and the type of the target audience corresponding to the placement region.

## Description

### BACKGROUND

### 1. TECHNICAL FIELD

The present invention relates to an advertisement selecting device, an advertisement printing system, a printer, an advertisement selecting method, and a program.

### 2. RELATED ART

Advertisements are printed on packages such as corrugated boxes in which products are packaged. Japanese Patent Application Publication No. 2024-135901 describes a technique in which an advertisement is printed on a package for which a reception method other than delivery in person such as package drop (unattended delivery) is designated, the advertisement appealing to a third party other than an addressee of the package. An advertisement effect on the third party can be obtained by using this technique.

### SUMMARY

In the above-mentioned technique, the advertisement effect can be expected to be exhibited only to a person who passes by a location where the package is placed in the designated reception method and sees the advertisement, and the advertisement effect is not sufficient. Accordingly, there is a demand for a technique that can improve the advertisement effect of the advertisement printed on the package.

An object of the present invention is to provide an advertisement selecting device, an advertisement printing system, a printer, an advertisement selecting method, and a program that can improve an advertisement effect of an advertisement printed on a package.

An advertisement selecting device in accordance with an embodiment of the present invention includes a storage and a controller. The controller is configured to: receive pieces of advertisement data for printing advertisements on a package to be delivered and receive settings of types of target audiences of the advertisements and placement regions of the advertisements in the package; store, in the storage, the received pieces of advertisement data, the types of the target audiences of the advertisements, and the placement regions of the advertisements in association with one another; and for each of the placement regions of the advertisements in the package, refer to the storage and select a piece of advertisement data for printing the advertisement in the placement region from among the pieces of advertisement data stored in the storage based on the placement region and the type of the target audience corresponding to the placement region.

An advertisement printing system in accordance with an embodiment of the present invention includes: the advertisement selecting device described above; and a printer configured to print the advertisement on the package by using the advertisement data selected by the advertisement selecting device.

A printer in accordance with an embodiment of the present invention is configured to print the advertisement on the package by using the advertisement data selected by the advertisement selecting device described above.

An advertisement selecting method in accordance with an embodiment of the present invention is executed by a computer. The advertisement selecting method includes: receiving pieces of advertisement data for printing advertisements on a package to be delivered and receiving settings of types of target audiences of the advertisements and placement regions of the advertisements in the package; storing, in a storage, the received pieces of advertisement data, the types of the target audiences of the advertisements, and the placement regions of the advertisements in association with one another; and for each of the placement regions of the advertisements in the package, referring to the storage and selecting a piece of advertisement data for printing the advertisement in the placement region from among the pieces of advertisement data stored in the storage based on the placement region and the type of the target audience corresponding to the placement region.

A program in accordance with an embodiment of the present invention is configured to cause a computer to execute: receiving pieces of advertisement data for printing advertisements on a package to be delivered and receiving settings of types of target audiences of the advertisements and placement regions of the advertisements in the package; storing, in a storage, the received pieces of advertisement data, the types of the target audiences of the advertisements, and the placement regions of the advertisements in association with one another; and for each of the placement regions of the advertisements in the package, referring to the storage and selecting a piece of advertisement data for printing the advertisement in the placement region from among the pieces of advertisement data stored in the storage based on the placement region and the type of the target audience corresponding to the placement region.

According to the above-mentioned configuration, an advertisement effect of an advertisement printed on a package can be improved.

### BRIEF DESCRIPTION OF DRAWINGS

Fig. 1 is a block diagram illustrating a configuration of an advertisement printing system according to an embodiment.
Fig. 2 is a diagram for explaining placement regions of advertisements in a package.
Fig. 3 is a diagram for explaining the placement regions of the advertisements in the package.
Fig. 4 is a diagram for explaining the placement regions of the advertisements in the package.
Fig. 5 is a diagram for explaining the placement regions of the advertisements in the package.
Fig. 6 is a diagram illustrating an advertisement management table.
Fig. 7 is a flowchart for explaining operations of registering advertisement data for printing the advertisements on the package in an advertisement printing system.
Fig. 8 is a diagram illustrating an example of a target audience setting screen.
Fig. 9 is a diagram illustrating an example of a placement region setting screen.
Fig. 10 is a diagram illustrating an example of an advertisement site access limit setting screen.
Fig. 11 is a diagram illustrating an example of an advertisement area limit setting screen.
Fig. 12 is a flowchart for explaining operations of printing the advertisements on the package in the advertisement printing system.

### DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically illustrated in order to simplify the drawing.

Description will be hereinbelow provided for embodiments of the present invention by referring to the drawings. It should be noted that the same or similar parts and components throughout the drawings will be denoted by the same or similar reference signs, and that descriptions for such parts and components will be omitted or simplified. In addition, it should be noted that the drawings are schematic and therefore different from the actual ones.

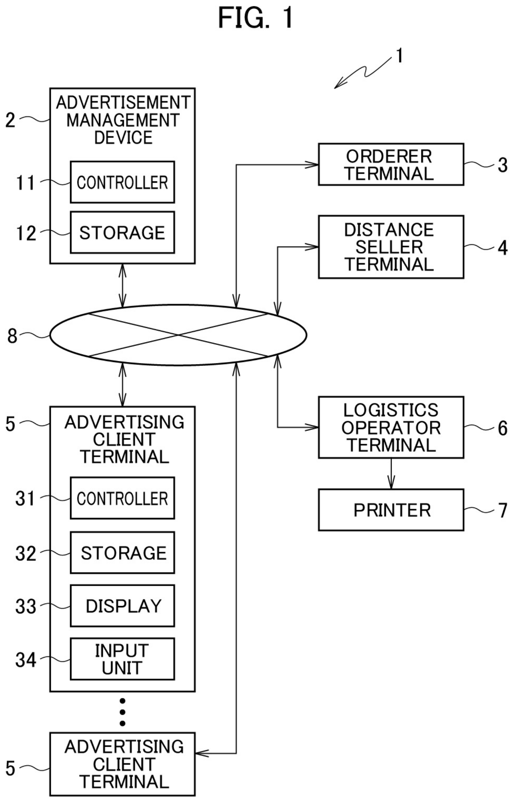

Fig. 1 is a block diagram illustrating a configuration of an advertisement printing system 1 according to an embodiment of the present invention. As illustrated in Fig. 1, the advertisement printing system 1 according to the present embodiment includes an advertisement management device (advertisement selecting device) 2, an orderer terminal 3, a distance seller terminal 4, an advertising client terminal 5, a logistics operator terminal 6, and a printer 7. The advertisement management device 2, the orderer terminal 3, the distance seller terminal 4, the advertising client terminal 5, and the logistics operator terminal 6 are connected to one another to be communicable via a network 8 such as the Internet.

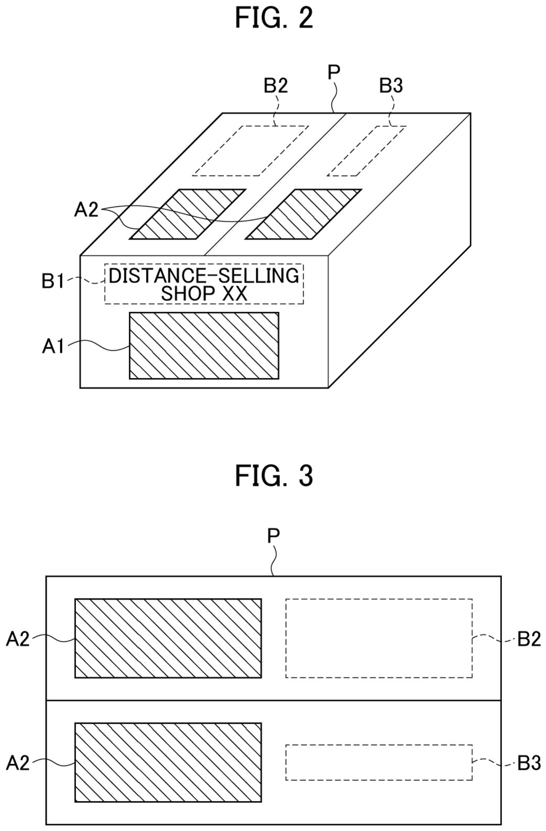

The advertisement management device 2 manages advertisement data for printing advertisements on a package P (see Fig. 2 and the like) to be delivered to an addressee. The advertisement management device 2 selects the advertisement data to be used in the printing of the advertisements on the package P to be shipped by the logistics operator, and transmits the selected advertisement data to the logistics operator terminal 6. The package P is an object in which a product is packaged in a packing material such as a corrugated box.

The advertisement management device 2 is formed of a computer including a CPU, a ROM, a RAM, a hard disk, and the like. The advertisement management device 2 includes a controller 11 and a storage 12.

The controller 11 controls operations of the entire advertisement management device 2. The controller 11 includes the CPU and the like.

The controller 11 receives the advertisement data from the advertising client terminal 5, and receives settings of an advertisement attribute for the received advertisement data. Specifically, the controller 11 receives the advertisement data transmitted from the advertising client terminal 5 and advertisement attribute information indicating setting contents of the advertisement attribute. In this case, the controller 11 also receives cooperation information such as a cooperation name indicating an advertising client cooperation. Then, the controller 11 stores an advertisement ID, a cooperation ID, the advertisement data, and the advertisement attribute information in association with one another in an advertisement management table 21 of the storage 12 to be described later.

The advertisement ID is information for uniquely identifying the advertisement. The cooperation ID is information for uniquely identifying the cooperation. The advertisement ID and the cooperation ID are issued by the controller 11.

The advertisement attribute includes an advertisement type, a type of target audience, a placement region, presence or absence of an advertisement site access limit, presence or absence of an advertisement area limit, a bid amount, and an agreed placement number.

The advertisement type indicates the type of a product, a service, or the like to be advertised.

The type of target audience indicates a type of people who are the target of the advertisement. In the present embodiment, the type of target audience includes a deliverer of the package P, the addressee of the package P, and a logistics warehouse worker working in a warehouse of the logistics operator that ships the package P.

The placement region is a region where the advertisement is placed (printed) on the package P. At least one placement region is set in the package P. The type of target audience is set for each of the placement regions. In the present embodiment, placement regions A1 to A4 illustrated in Figs. 2 to 5 are set as the placement regions of the advertisements in the package P.

The deliverer and the addressee are set as the target audience of the placement region A1 illustrated in Fig. 2 near a region B1 in which a brand name of a distance seller is displayed. Specifically, the placement region A1 is the placement region for the deliverer and the addressee.

The deliverer is set as the target audience of the placement regions A2 illustrated in Figs. 2 and 3 near a region B2 in which a waybill on a top surface of the package P is attached and a region B3 in which cautions relating to the delivery are described. Specifically, the placement regions A2 are the placement regions for the deliverer.

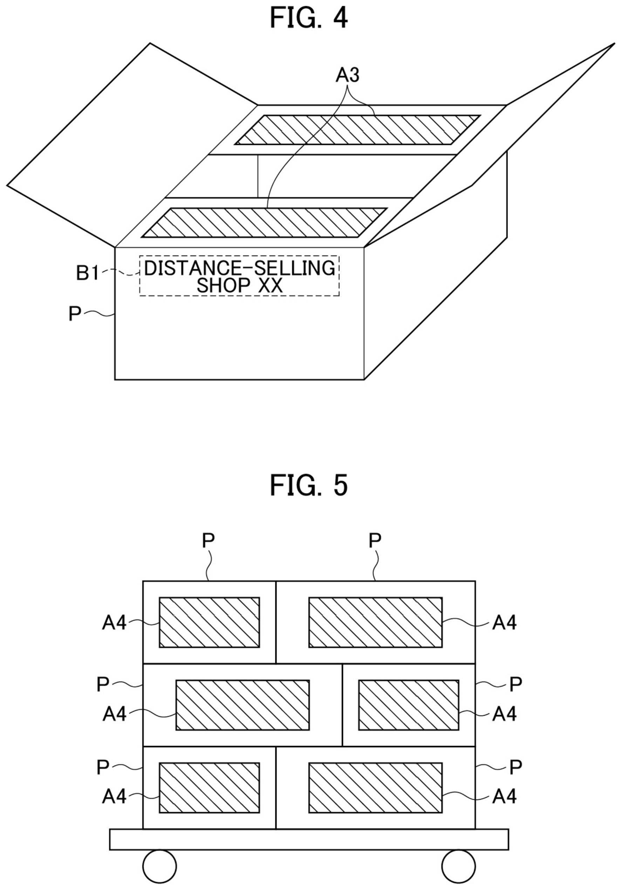

The addressee is set as the target audience of the placement regions A3 illustrated in Fig. 4 on inner flaps of the package P. Specifically, the placement regions A3 are the placement regions for the addressee.

The logistics warehouse worker is set as the target audience of the placement region A4 illustrated in Fig. 5 and being visible from the lateral side in the case where the packages P are stacked one on top of another. Specifically, the placement region A4 is the placement region for the logistics warehouse worker.

The presence or absence of the advertisement site access limit indicates presence or absence of an access limit that limits an access to an advertisement site to a period from start to completion of delivery of the package P, the advertisement site being a web site relating to the advertisement. The advertisement site access limit can be set only for an advertisement for which the deliverer is set as the target audience. In the present embodiment, an image of the advertisement printed on the package P includes an image of a code for accessing the advertisement site.

The presence or absence of the advertisement area limit indicates whether to limit the placement of advertisement to the case where the advertisement relates to a delivery route and a delivery region of the package P. The advertisement area limit can be set only for the advertisement for which the deliverer is set as the target audience.

The bid amount is an amount of money presented by the advertising client as an advertisement placement fee that is a fee for the advertisement per placement. A standard fee is set for each placement region as the advertisement placement fee. However, there is a case where a fee higher than the standard fee is set due to reasons such as, for example, placement of the advertisement is desired to be prioritized by the advertising client. Accordingly, the bid amount is the same as the standard fee in some cases, and is different from the standard fee in the other cases.

The agreed placement number is a number set and agreed between an advertisement management company and the advertising client as the number of times of placing the advertisement.

For each of the placement regions in the package P, the controller 11 refers to the advertisement management table 21, and selects the advertisement data for printing the advertisement in the placement region, based on the placement region and the type of target audience corresponding to the placement region.

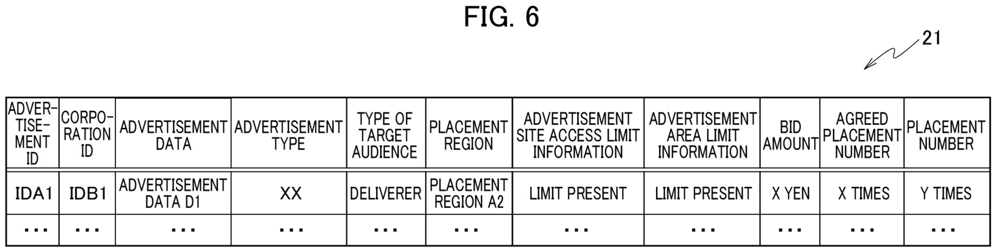

The storage 12 stores a program executed by the CPU of the controller 11. The storage 12 stores the advertisement management table 21 illustrated in Fig. 6. The storage 12 is formed of the hard disk or the like.

The advertisement management table 21 is a table in which the advertisement ID, the cooperation ID, the advertisement data, the advertisement attribute information, and the placement number are associated with one another. Specifically, the advertisement management table 21 is a table in which the advertisement ID, the cooperation ID, the advertisement data, the advertisement type, the type of target audience, the placement region, the presence or absence of the advertisement site access limit, the presence or absence of the advertisement area limit, the bid amount, the agreed placement number, and the placement number are associated with one another.

The above-mentioned placement number is the number of times the advertisement has been placed. In the case where the advertisement data is newly stored in the advertisement management table 21, "0 times" is stored as the placement number corresponding to this advertisement data. The placement number is updated (incremented) every time the advertisement is placed.

The orderer terminal 3 is used by the orderer to order a product. The orderer terminal 3 transmits order information of the product to the distance seller terminal 4. The orderer terminal 3 is formed of a computer including a CPU, a ROM, a RAM, a hard disk, and the like.

The orderer of the product and the addressee who receives the package P in which this product is packaged are the same in some cases, and are different in the other cases. In the present embodiment, the orderer and the addressee are assumed to be the same.

The above-mentioned order information includes production information and addressee information. The product information is information indicating the ordered product. The addressee information includes the name and the address of the addressee (orderer) of the product.

In the case where designation of delivery time and date by the orderer is present, the order information includes designated delivery time and date information indicating the designated delivery time and date.

The distance seller terminal 4 is a terminal device used in the distance seller. The distance seller terminal 4 receives the order information from the orderer terminal 3, and transmits order reception information to the advertisement management device 2 and the logistics operator terminal 6. The distance seller terminal 4 is formed of a computer including a CPU, a ROM, a RAM, a hard disk, and the like.

The above-mentioned order reception information includes the product information, the addressee information, and delivery time and date information. In the case where the order information from the orderer terminal 3 includes the designated delivery time and date information, the delivery time and date information included in the order reception information is information indicating the delivery time and date designated in the designated delivery time and date information. In the case where the order information from the orderer terminal 3 does not include the designated delivery time and date information, the delivery time and date information included in the order reception information is information indicating delivery time and date determined by the distance seller.

The advertising client terminal 5 is a terminal device used in an advertising client corporation. The advertising client terminal 5 transmits the advertisement data, the advertisement attribute information, and corporation information to the advertisement management device 2. The advertising client terminal 5 is formed of a computer including a CPU, a ROM, a RAM, a hard disk, and the like. There may be one or multiple advertising client corporations in which the advertising client terminal 5 is provided.

The advertising client terminal 5 includes a controller 31, a storage 32, a display 33, and an input unit 34.

The controller 31 controls operations of the entire advertising client terminal 5. The controller 31 includes the CPU and the like.

The controller 31 generates the advertisement attribute information in response to an operation of inputting the settings of the advertisement attribute by an operator, and transmits the generated advertisement attribute information to the advertisement management device 2 together with the advertisement data and the corporation information.

The storage 32 stores a program executed by the CPU of the controller 31, the advertisement data, and the like. The storage 32 is formed of the hard disk or the like.

The display 33 displays various screens such as a target audience setting screen 41 to be described later. The display 33 is formed of a liquid crystal display panel or the like.

The input unit 34 receives input operations of the operator. The input unit 34 includes a keyboard, a mouse, and the like.

The logistics operator terminal 6 is a terminal device used in a logistics operator. The logistics operator terminal 6 instructs the printer 7 to print the advertisement on the package P. The logistics operator terminal 6 is formed of a computer including a CPU, a ROM, a RAM, a hard disk, and the like.

The printer 7 prints the advertisement on the package P. The printer 7 includes a print mechanism (not illustrated) such as an inkjet head. The printer 7 can perform printing on a top surface and side surfaces of the package P.

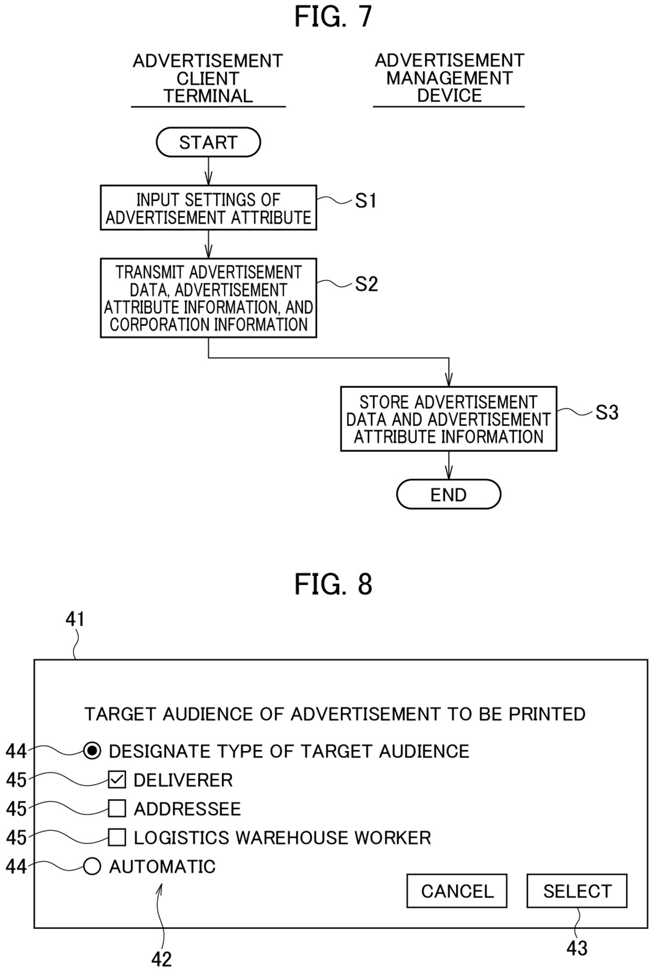

Next, operations of registering the advertisement data for printing the advertisement on the package P in the advertisement printing system 1 are explained with reference to the flowchart of Fig. 7.

In step S1 of Fig. 7, an operation on the advertising client terminal 5 is performed to input the settings of the advertisement attribute for the advertisement intended to be placed on the package P by the advertising client. Specifically, a setting is inputted for each of the advertisement type, the type of target audience, the placement region, the presence or absence of the advertisement site access limit, the presence or absence of the advertisement area limit, the bid amount, and the agreed placement number. Note that, in the case where the target audience is a person other than the deliverer, no settings are inputted for the presence or absence of the advertisement site access limit and the presence or absence of the advertisement area limit.

In the input of the setting of the type of target audience, the target audience setting screen is displayed on the display 33, and the setting of the type of target audience of the advertisement is inputted in the displayed target audience setting screen.

An example of the target audience setting screen is illustrated in Fig. 8. As illustrated in Fig. 8, a target audience designation reception field 42 and a select button 43 are displayed on the target audience setting screen 41.

The target audience designation reception field 42 receives selection of whether to designate the type of target audience or not, and in the case where the type of target audience is to be designated, receives this designation.

An option of "designate type of target audience" that allows designation of the type of target audience and an option of "automatic" that leaves selection of the type of target audience to the advertisement printing system 1 are provided in the target audience designation reception field 42. Radio buttons 44 for selecting the respective options are provided in the target audience designation reception field 42.

The types of target audiences that can be designated in the case where the type of target audience is to be designated are displayed in the target audience designation reception field 42. As described above, in the present embodiment, the deliverer, the addressee, and the logistic warehouse worker are provided as the types of target audiences. Accordingly, these types are displayed in the target audience designation reception field 42 as types of target audiences that can be designated. Check boxes 45 for designating the respective types are provided in the target audience designation reception field 42.

The select button 43 is a button for finalizing the setting of the type of target audience.

In the target audience designation reception field 42, "designate type of target audience" or "automatic" is selected, the type of target audience is designated in the case where "designate type of target audience" is selected, and the select button 43 is pressed. The input of the setting of the type of target audience is thereby completed.

In the input of the setting of the placement region of the advertisement, a placement region setting screen corresponding to the type of target audience is displayed on the display 33, and the setting of the placement region of the advertisement is inputted on the displayed placement region setting screen.

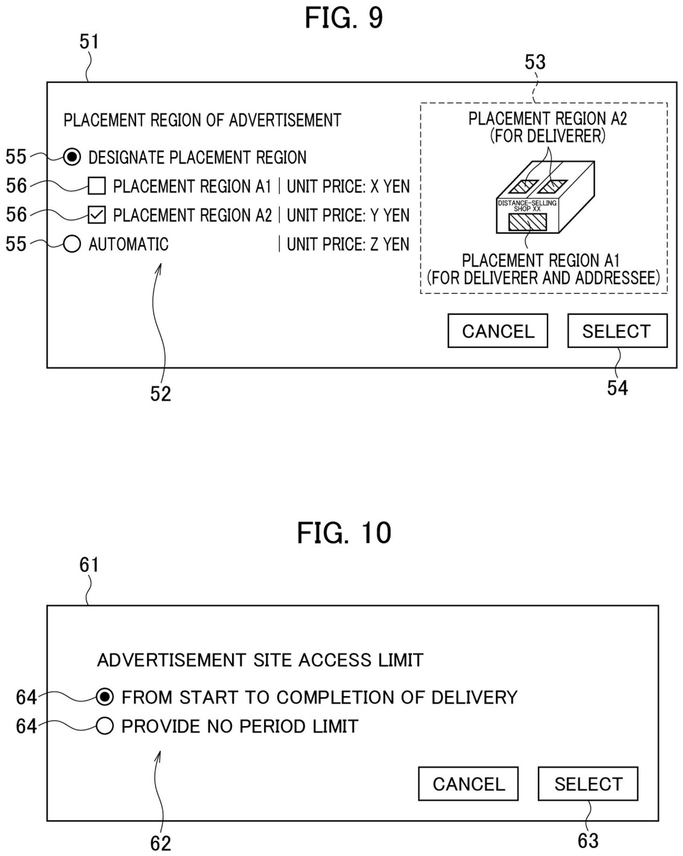

An example of the placement region setting screen displayed in the case where the deliverer is set as the type of target audience is illustrated in Fig. 9. A placement region designation reception field 52, a placement region display field 53, and a select button 54 are displayed on the placement region setting screen 51 illustrated in Fig. 9.

The placement region designation reception field 52 receives selection of whether to designate the placement region or not, and in the case where the placement region is to be designated, receives this designation.

An option of "designate placement region" that allows designation of the placement region and an option of "automatic" that leaves selection of the placement region to the advertisement printing system 1 are provided in the placement region designation reception field 52. Radio buttons 55 for selecting the respective options are provided in the placement region designation reception field 52.

The placement regions that can be designated in the case where the placement region is to be designated are displayed in the placement region designation reception field 52. Check boxes 56 for designating the respective placement regions are provided in the placement region designation reception field 52.

A standard fee (unit price) for placing the advertisement in each of the placement regions and a standard fee (unit price) in the case where "automatic" is selected are displayed in the placement region designation reception field 52.

The placement region display field 53 is a portion where illustration indicating the placement regions is displayed.

The select button 54 is a button for finalizing the setting of the placement region.

In the placement region designation reception field 52, "designate placement region" or "automatic" is selected, the placement region is designated in the case where "designate placement region" is selected, and the select button 54 is pressed. The input of the setting of the placement region is thereby completed.

In the input of the setting of the presence or absence of the advertisement site access limit, an advertisement site access limit setting screen is displayed on the display 33, and the setting of the presence or absence of the advertisement site access limit is inputted on the displayed advertisement site access limit setting screen.

An example of the advertisement site access limit setting screen is illustrated in Fig. 10. As illustrated in Fig. 10, an access limit presence-absence selection field 62 and a select button 63 are displayed on the advertisement site access limit setting screen 61.

The access limit presence-absence selection field 62 receives selection of whether or not to limit the access to the advertisement site to the period from start to completion of delivery of the package P. An option of "from start to completion of delivery" and an option of "provide no period limit" are provided in the access limit presence-absence selection field 62. Radio buttons 64 for selecting the respective options are provided in the access limit presence-absence selection field 62.

The select button 63 is a button for finalizing the setting of the presence or absence of the advertisement site access limit.

In the access limit presence-absence selection field 62, one of the two options is selected, and the select button 63 is pressed. The input of the setting of the presence or absence of the advertisement site access limit is thereby completed.

In the input of the setting of the presence or absence of the advertisement area limit, an advertisement area limit setting screen is displayed on the display 33, and the setting of the presence or absence of the advertisement area limit is inputted on the displayed advertisement area limit setting screen.

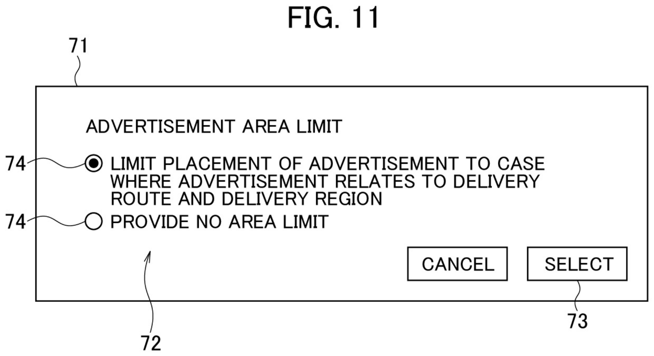

An example of the advertisement area limit setting screen is illustrated in Fig. 11. As illustrated in Fig. 11, an area limit presence-absence selection field 72 and a select button 73 are displayed on the advertisement area limit setting screen 71.

The area limit presence-absence selection field 72 receives selection of whether or not to limit the placement of the advertisement to the case where the advertisement relates to the delivery route and the delivery region of the package P. An option of "limit the placement of the advertisement to the case where the advertisement relates to the delivery route and the delivery region" and an option of "provide no area limit" are provided in the area limit presence-absence selection field 72. Radio buttons 74 for selecting the respective options are provided in the area limit presence-absence selection field 72.

The select button 73 is a button for finalizing the setting of the presence or absence of the advertisement area.

In the area limit presence-absence selection field 72, one of the two options is selected, and the select button 73 is pressed. The input of the setting of the presence or absence of the advertisement area limit is thereby completed.

In the input of the settings of the advertisement type, the bid amount, and the agreed placement number, setting screens (not illustrated) corresponding to the respective settings are displayed on the display 33, and the settings are inputted on the displayed setting screens.

In the input of the setting of the agreed placement number, information indicating an inputted placement number is transmitted from the advertising client terminal 5 to the advertisement management device 2, and is set as the agreed placement number after establishment of an agreement between the advertisement management company and the advertising client.

Returning to Fig. 7, in step S2, the controller 31 of the advertising client terminal 5 transmits the advertisement data of the advertisement to be placed on the package P, the advertisement attribute information indicating the setting contents of the advertisement attribute set and inputted in step S1, and the corporation information, to the advertisement management device 2.

Next, in step S3, the controller 11 of the advertisement management device 2 stores the advertisement data and the advertisement attribute information in the advertisement management table 21.

Specifically, the controller 11 issues the advertisement ID for identifying the advertisement of the received advertisement data. The controller 11 determines whether or not the corporation indicated by the received corporation information is a corporation for which the corporation ID has been already issued, based on the corporation information. If the corporation is not a corporation for which the corporation ID has been already issued, the controller 11 issues the corporation ID for identifying this corporation.

Then, the controller 11 stores the advertisement ID, the corporation ID, and the advertisement data in the advertisement management table 21 in association with the advertisement type, the type of target audience, the placement region, the presence or absence of the advertisement site access limit, the presence or absence of the advertisement area limit, the bid amount, the agreed placement number, and the placement number indicated by the advertisement attribute information. In this case, "0 times" is stored as the placement number. The series of operations is thereby completed.

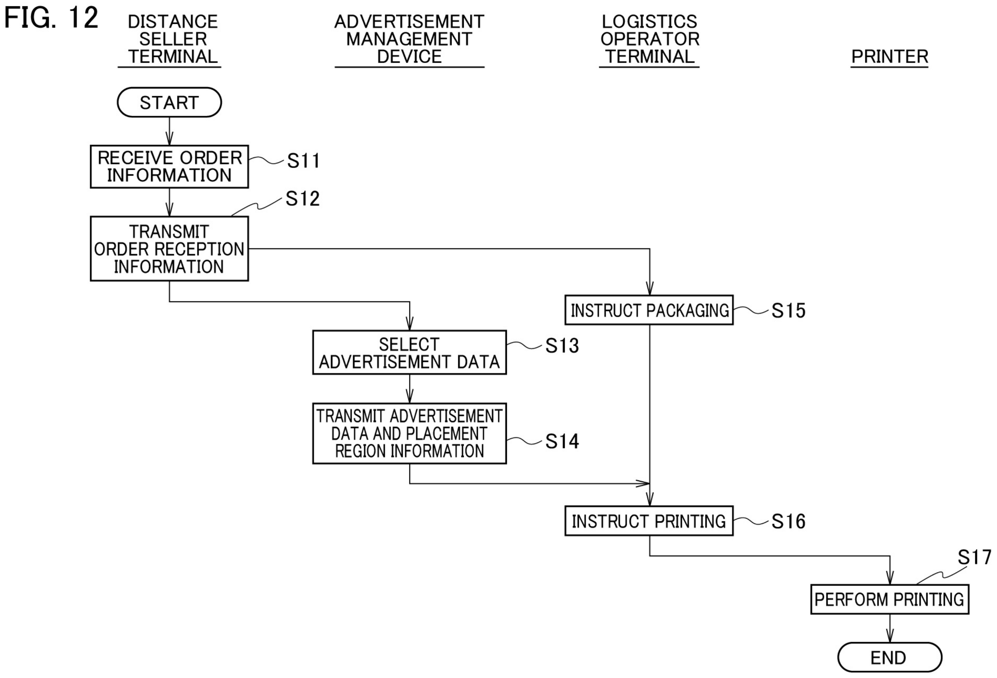

Next, operations of printing the advertisement on the package P in the advertisement printing system 1 are explained with reference to the flowchart of Fig. 12.

In step S11 of Fig. 12, the distance seller terminal 4 receives the order information transmitted from the orderer terminal 3.

Next, in step S12, the distance seller terminal 4 transmits the order reception information to the advertisement management device 2 and the logistics operator terminal 6.

When the advertisement management device 2 receives the order reception information, in step S13, the controller 11 selects the advertisement data for printing the advertisement in each of the placement regions A1 to A4 of the package P in which the product indicated by the order reception information is packaged.

Specifically, for each of the placement regions A1 to A4, the controller 11 refers to the advertisement management table 21, and selects the advertisement data for printing the advertisement in the placement region, based on the placement region and the type of target audience corresponding to the placement region. In other words, for each of the placement regions A1 to A4, the controller 11 selects the advertisement data in which the placement region and the type of target audience corresponding to the placement region are set in the advertisement attribute, as the advertisement data for printing the advertisement in the placement region.

Note that the following advertisement data is excluded from the selection for the placement regions A1 and A2 that are the placement regions whose target audience includes the deliverer: the advertisement data of the advertisements for which the setting of the presence or absence of the advertisement area limit is "limit present" and that do not relate to the delivery route and the delivery region of the package P. The delivery route and the delivery region are determined based on the address of the addressee included in the addressee information of the product information. Whether or not the advertisement is the advertisement relating to the delivery route and the delivery region can be determined based on the advertisement type. For example, in the case where the advertisement type indicates that the advertisement is an advertisement of a shop located in a region far away from the delivery route or an advertisement of a product not sold in the delivery region, the advertisement is determined to be the advertisement not relating to the delivery route and the delivery region.

In some cases, there are multiple pieces of advertisement data satisfying the condition that the placement region and the type of target audience corresponding to the placement region are set in the advertisement attribute, for each of the placement regions A1 to A4. Which piece of the advertisement data is to be selected from one or more pieces of advertisement data satisfying the above-mentioned condition can be determined, for example, as follows.

For example, one piece of advertisement data may be selected from one or more pieces of advertisement data satisfying the above-mentioned condition based on the bid amount (advertisement placement fee). Specifically, the advertisement data with the highest bid amount may be selected.

One piece of advertisement data may be selected from one or more pieces of advertisement data satisfying the above-mentioned condition based on the agreed placement number for each of the placement regions A1 to A4. Specifically, one piece of advertisement data with the largest agreed placement number may be selected from among pieces of advertisement data in which the placement number is lower than the agreed placement number among one or more pieces of advertisement data satisfying the above-mentioned condition.

For each of the placement regions A1 and A2 whose type of target audience includes the deliverer, one piece of advertisement data may be selected from one or more pieces of advertisement data satisfying the above-mentioned condition based on the delivery route and the delivery region of the package P.

Specifically, for the placement regions A2 whose type of target audience is the deliverer, the piece of advertisement data of the advertisement relating to the delivery route and the delivery region of the package P among one or more pieces of advertisement data satisfying the above-mentioned condition may be selected. For the placement region A1 whose type of target audience is the deliverer or the addressee, the piece of advertisement data of the advertisement relating to the delivery route and the delivery region of the package P may be selected from one or more pieces of advertisement data in which the placement region A1 is set as the placement region of the advertisement and in which the deliverer is set as the type of target audience.

As described above, whether the advertisement is the advertisement relating to the delivery route and the delivery region can be determined based on the advertisement type. For example, in the case where the advertisement type indicates that the advertisement is an advertisement of a shop located along the delivery route or an advertisement of a product sold in the delivery region, the advertisement is determined to be the advertisement relating to the delivery route and the delivery region.

For the placement regions A1 and A2 whose type of target audience includes the deliverer, one piece of advertisement data may be selected from one or more pieces of advertisement data satisfying the above-mentioned condition based on the delivery time and date of the package P.

Specifically, for the placement regions A2 whose type of target audience is the deliverer, one piece of advertisement data of an advertisement relating to the delivery time and date of the package P among one or more pieces of advertisement data satisfying the above-mentioned condition may be selected. For the placement region A1 whose type of target audience is the deliverer or the addressee, the piece of advertisement data of the advertisement relating to the delivery time and date of the package P may be selected from one or more pieces of advertisement data in which the placement region A1 is set as the placement region of the advertisement and in which the deliverer is set as the type of target audience.

The delivery time and date of the package P is indicated by the delivery time and date information included in the order reception information. Whether the advertisement is the advertisement relating to the delivery time and date or not can be determined based on the advertisement type. For example, in the case where the advertisement type indicates that the advertisement is an advertisement of an event held in a period including the delivery time and date or an advertisement of a product released in a period including the delivery time and date, the advertisement is determined as the advertisement relating to the delivery time and date.

Assume a case where, for the placement regions A2 whose type of target audience is the deliverer, the pieces of advertisement data satisfying the above-mentioned condition include the advertisement data of the advertisement for which the setting of the presence or absence of the advertisement site access limit is "limit present" and the advertisement data of the advertisement for which the setting is "limit absent". In this case, the advertisement data of the advertisement with one of the settings may be preferentially selected.

For each of the placement regions A1 to A4, any piece of advertisement data may be selected from one or more pieces of advertisement data satisfying the above-mentioned condition.

In the case where the advertisement data for printing the advertisement is selected for each of the placement regions A1 to A4, in step S14, the controller 11 transmits the advertisement data selected for each of the placement regions A1 to A4 and the placement region information indicating the corresponding placement region, to the logistics operator terminal 6.

Meanwhile, in the case where the logistics operator terminal 6 receives the order reception information transmitted by the distance seller terminal 4 in step S12, in step S15, the logistics operator terminal 6 transmits a packaging instruction to a terminal device (not illustrated) of the logistics warehouse worker. The logistics warehouse worker thereby packages a product in a packaging material, and the package P is formed.

Thereafter, in the case where the logistics operator terminal 6 receives the advertisement data and the placement region information transmitted by the advertisement management device 2 in step S14, in step S16, the logistics operator terminal 6 instructs the printer 7 to perform the printing on the package P. Specifically, the logistics operator terminal 6 instructs the printer 7 to print the advertisement in each of the regions indicated by the respective pieces of the placement region information, based on the advertisement data corresponding to the region.

When the logistics operator terminal 6 gives the instruction of printing, in step S17, the printer 7 performs the printing on the package P based on the instruction of the logistics operator terminal 6. The advertisement is thereby printed in each of the placement regions A1 to A4 of the package P. The series of operations is thereby completed.

The package P subjected to the printing by the printer 7 is handed over to the delivery company, and is delivered to the addressee by the delivery company.

When the advertisement site of the advertisement printed on the package P is accessed, bonuses such as points and coupons are given to a person accessing the advertisement site. Note that, in the case where the advertisement whose target audience is the deliverer and that is printed in at least one of the placement regions A1 and A2 whose type of target audience includes the deliverer is the advertisement for which the setting of the presence or absence of the advertisement site access limit is "limit present", the access to the advertisement site of this advertisement is limited to the period from start to completion of the delivery of the package P.

As explained above, in the advertisement printing system 1, for each of the placement regions A1 to A4, the controller 11 of the advertisement management device 2 refers to the advertisement management table 21, and selects the advertisement data for printing the advertisement in the placement region based on the placement region and the type of target audience corresponding to the placement region. This allows an advertisement desired to be shown to the target audience to be printed depending on the placement region, and an advertisement effect of the advertisement printed on the package P can be thus improved.

In the selection of the advertisement data, for each of the placement regions A1 to A4, one piece of advertisement data may be selected from one or more pieces of advertisement data satisfying the condition that the placement region and the type of target audience corresponding to the placement region are set in the advertisement attribute, based on the bid amount (advertisement placement fee). The advertisement data can be thereby selected based on a degree of priority corresponding to the fee paid by the advertising client.

For the placement regions A1 and A2 whose type of target audience includes the deliverer, one piece of advertisement data may be selected from one or more pieces of advertisement data satisfying the above-mentioned condition, based on the delivery route and the delivery region of the package P. An advertisement from which a high advertisement effect on the deliverer can be expected can be thereby printed on the package P.

For the placement regions A1 and A2 whose type of target audience includes the deliverer, one piece of advertisement data may be selected from one or more pieces of advertisement data satisfying the above-mentioned condition, based on the delivery time and date of the package P. An advertisement from which a high advertisement effect on the deliverer can be expected can be printed on the package P also in this case.

In the advertisement printing system 1, the advertisement site access limit can be set for the advertisement for which the deliverer is set as the target audience. Accordingly, the advertisement data of the advertisement for which the setting of the presence or absence of the advertisement site access limit is "limit present" can be set as the advertisement data for printing the advertisement in the placement regions A1 and A2 whose type of target audience includes the deliverer. Accordingly, it is possible to respond to such a request of the advertising client that the access to the advertisement site by the deliverer is desired to be limited to the period from start to completion of the delivery of the package P.

The present application has, for example, a configuration described below.

An advertisement selecting device in accordance with an embodiment includes a storage and a controller. The controller is configured to: receive pieces of advertisement data for printing advertisements on a package to be delivered and receive settings of types of target audiences of the advertisements and placement regions of the advertisements in the package; store, in the storage, the received pieces of advertisement data, the types of the target audiences of the advertisements, and the placement regions of the advertisements in association with one another; and for each of the placement regions of the advertisements in the package, refer to the storage and select a piece of advertisement data for printing the advertisement in the placement region from among the pieces of advertisement data stored in the storage based on the placement region and the type of the target audience corresponding to the placement region.

The controller may be configured to: further receive a setting of an advertisement placement fee for each of the pieces of advertisement data, and for each of the placement regions of the advertisements in the package, select the piece of advertisement data for printing the advertisement in the placement region from among the pieces of advertisement data stored in the storage also based on the advertisement placement fee set for each of the pieces of advertisement data.

For the placement region whose type of the target audience includes a deliverer of the package, the controller may be configured to select the piece of advertisement data for printing the advertisement in the placement region from among the pieces of advertisement data stored in the storage also based on a delivery route and a delivery region of the package.

For the placement region whose type of the target audience includes a deliverer of the package, the controller may be configured to select the piece of advertisement data for printing the advertisement in the placement region from among the pieces of advertisement data stored in the storage also based on a delivery time and date of the package.

The controller may be capable of selecting advertisement data for printing an advertisement that allows access to a web site relating to the advertisement only in a period from start to completion of delivery of the package, as the advertisement data for printing the advertisement in the placement region whose type of the target audience includes a deliverer of the package.

An advertisement printing system in accordance with an embodiment includes: the advertisement selecting device described above; and a printer configured to print the advertisement on the package by using the advertisement data selected by the advertisement selecting device.

A printer in accordance with an embodiment is configured to print the advertisement on the package by using the advertisement data selected by the advertisement selecting device described above.

An advertisement selecting method in accordance with an embodiment is executed by a computer. The advertisement selecting method includes: receiving pieces of advertisement data for printing advertisements on a package to be delivered and receiving settings of types of target audiences of the advertisements and placement regions of the advertisements in the package; storing, in a storage, the received pieces of advertisement data, the types of the target audiences of the advertisements, and the placement regions of the advertisements in association with one another; and for each of the placement regions of the advertisements in the package, referring to the storage and selecting a piece of advertisement data for printing the advertisement in the placement region from among the pieces of advertisement data stored in the storage based on the placement region and the type of the target audience corresponding to the placement region.

A program in accordance with an embodiment is configured to cause a computer to execute: receiving pieces of advertisement data for printing advertisements on a package to be delivered and receiving settings of types of target audiences of the advertisements and placement regions of the advertisements in the package; storing, in a storage, the received pieces of advertisement data, the types of the target audiences of the advertisements, and the placement regions of the advertisements in association with one another; and for each of the placement regions of the advertisements in the package, referring to the storage and selecting a piece of advertisement data for printing the advertisement in the placement region from among the pieces of advertisement data stored in the storage based on the placement region and the type of the target audience corresponding to the placement region.

Further, the features of all embodiments and all claims can be combined with each other as long as they do not contradict each other.

## Claims

1. An advertisement selecting device (2) comprising:
a storage (12); and
a controller (11),
wherein the controller (11) is configured to:
receive pieces of advertisement data for printing advertisements on a package (P) to be delivered and receive settings of types of target audiences of the advertisements and placement regions of the advertisements in the package (P);
store, in the storage (12), the received pieces of advertisement data, the types of the target audiences of the advertisements, and the placement regions of the advertisements in association with one another; and
for each of the placement regions of the advertisements in the package (P), refer to the storage (12) and select a piece of advertisement data for printing the advertisement in the placement region from among the pieces of advertisement data stored in the storage (12) based on the placement region and the type of the target audience corresponding to the placement region.

2. The advertisement selecting device (2) according to claim 1, wherein the controller (11) is configured to:
further receive a setting of an advertisement placement fee for each of the pieces of advertisement data, and
for each of the placement regions of the advertisements in the package (P), select the piece of advertisement data for printing the advertisement in the placement region from among the pieces of advertisement data stored in the storage (12) also based on the advertisement placement fee set for each of the pieces of advertisement data.

3. The advertisement selecting device (2) according to claim 1, wherein, for the placement region whose type of the target audience includes a deliverer of the package (P), the controller (11) is configured to select the piece of advertisement data for printing the advertisement in the placement region from among the pieces of advertisement data stored in the storage (12) also based on a delivery route and a delivery region of the package (P).

4. The advertisement selecting device (2) according to claim 1, wherein, for the placement region whose type of the target audience includes a deliverer of the package (P), the controller (11) is configured to select the piece of advertisement data for printing the advertisement in the placement region from among the pieces of advertisement data stored in the storage (12) also based on a delivery time and date of the package (P).

5. The advertisement selecting device (2) according to claim 1, wherein the controller (11) is capable of selecting advertisement data for printing an advertisement that allows access to a web site relating to the advertisement only in a period from start to completion of delivery of the package (P), as the advertisement data for printing the advertisement in the placement region whose type of the target audience includes a deliverer of the package (P).

6. An advertisement printing system (1) comprising:
the advertisement selecting device (2) according to any one of claims 1 to 5; and
a printer (7) configured to print the advertisement on the package (P) by using the advertisement data selected by the advertisement selecting device (2).

7. A printer (7) configured to print the advertisement on the package (P) by using the advertisement data selected by the advertisement selecting device (2) according to any one of claims 1 to 5.

8. An advertisement selecting method executed by a computer, the advertisement selecting method comprising:
receiving pieces of advertisement data for printing advertisements on a package (P) to be delivered and receiving settings of types of target audiences of the advertisements and placement regions of the advertisements in the package (P);
storing, in a storage (12), the received pieces of advertisement data, the types of the target audiences of the advertisements, and the placement regions of the advertisements in association with one another; and
for each of the placement regions of the advertisements in the package (P), referring to the storage (12) and selecting a piece of advertisement data for printing the advertisement in the placement region from among the pieces of advertisement data stored in the storage (12) based on the placement region and the type of the target audience corresponding to the placement region.

9. A program configured to cause a computer to execute:
receiving pieces of advertisement data for printing advertisements on a package (P) to be delivered and receiving settings of types of target audiences of the advertisements and placement regions of the advertisements in the package (P);
storing, in a storage (12), the received pieces of advertisement data, the types of the target audiences of the advertisements, and the placement regions of the advertisements in association with one another; and
for each of the placement regions of the advertisements in the package (P), referring to the storage (12) and selecting a piece of advertisement data for printing the advertisement in the placement region from among the pieces of advertisement data stored in the storage (12) based on the placement region and the type of the target audience corresponding to the placement region.
